(19) Europäisches Patentamt
European Patent Office
Office européen des brevets

(11) Veröffentlichungsnummer: **0 053 098**
**B1**

# (12) EUROPÄISCHE PATENTSCHRIFT

(45) Veröffentlichungstag der Patentschrift: **31.07.85**

(51) Int. Cl.⁴: **C 07 F 9/15**, C 08 K 5/52 // C10M137/02

(21) Anmeldenummer: **81810458.0**

(22) Anmeldetag: **19.11.81**

(54) **Alkanolaminester von cyclischen 1,1'-Biphenyl-2,2'-diyl- und Alkyliden-1,1'-biphenyl-2,2'-diyl-phosphiten.**

(30) Priorität: **24.11.80 US 209786**

(43) Veröffentlichungstag der Anmeldung: **02.06.82 Patentblatt 82/22**

(45) Bekanntmachung des Hinweises auf die Patenterteilung: **31.07.85 Patentblatt 85/31**

(84) Benannte Vertragsstaaten: **BE CH DE FR GB IT LI NL SE**

(56) Entgegenhaltungen:
**EP - A - 0 002 821**
**EP - A - 0 009 115**
**US - A - 2 841 607**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Spivack, John D., 1 Blue Jay Street, Spring Valley New York 10977 (US)**
Erfinder: **Dexter, Martin, 416 Cedar Drive West, Briarcliff Manor, NY 10510 (US)**
Erfinder: **Pastor, Stephen D., 112 Union Road, Spring Valley New York 10977 (US)**

**EP 0 053 098 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Organische polymere Materialien wie Kunststoffe und Harze, Schmieröle und Mineralöle unterliegen thermischem und oxydativem Abbau sowie Photoabbau. Eine große Anzahl unterschiedlicher Stabilisatoren ist in der Technik zur Stabilisierung verschiedener Substrate bekannt. Ihre Wirksamkeit wechselt je nach den Ursachen des Abbaus und dem stabilisierten Substrat. Im Verlauf der vorliegenden Arbeit wurde gefunden, daß Stabilisatoren, welche sehr wirksame Langzeitantioxydantien darstellen, verhältnismäßig schlechte Verarbeitungsstabilisatoren sind und das Substrat nicht gegen thermischen Abbau bei kurzzeitig relativ hohen Verarbeitungstemperaturen schützen. Zahlreiche Stabilisatoren sind mehr oder weniger unverträglich mit den Substraten, wodurch während der Lebensdauer eines Produkts Probleme auftreten und die Wirksamkeit des Stabilisators verringert wird. Manche Stabilisatoren sind entweder zu flüchtig oder thermisch bzw. hydrolytisch unbeständig, um als technische Stabilisatoren brauchbar zu sein.

Die erfindungsgemäßen Phosphite besitzen eine ungewöhnliche Kombination wünschenswerter Eigenschaften gegenüber vorbekannten Phosphiten, was diese Verbindungen als Stabilisatoren besonders wirksam und nützlich macht.

Phosphite sind aus zahlreichen Veröffentlichungen bekannt. US-Patentschrift 41 96 117 offenbart cyclische Biphenyl-phosphite oder -thiophosphite, worin das Phosphoratom über O oder S an eine Kohlenwasserstoffgruppe oder an eine kohlenwasserstoffsubstituierte cyclische Biphenyl-phosphit- oder -thiophosphitgruppe gebunden ist. Die SU-Patentschriften 3 78 389, 4 29 070 und 4 40 390 beschreiben die Stabilisierung verschiedener Polymere mit organischen Phosphiten oder solche Phosphite enthaltenden Gemischen, wobei als Phosphite cyclische Methylen-bis-phenyl-phosphite vorliegen. Weitere 1,1'-Biphenyl-2,2'-diylphosphite sind in Chemical Abstracts, 68, 12597s (1968), 73, 15657c (1970) und 75, 130242g (1971) offenbart. Diese verschiedenen Verbindungen, die alle keine Alkanolaminogruppen enthalten, sollen Stabilisatoren für verschiedenartige Polymere sein.

Ferner sind Alkanolamin-phosphite und die Stabilisierung von Vinyl- und Vinylidenharzen mit diesen in der US-Patentschrift 28 41 607 offenbart. Es ist jedoch zu bemerken, daß sich diese Phosphite in ihrer Struktur erheblich von den Verbindungen dieser Erfindung unterscheiden. Ein näher vergleichbares Alkanolamin-phosphit ist aus EP-A-9115 bekannt. Die vorliegenden Alkanolaminester sind jedoch überraschenderweise bedeutend wirksamer als Verarbeitungsstabilisatoren.

Dementsprechend besteht die Hauptaufgabe dieser Erfindung darin, cyclische Biphenyl-phosphitverbindungen zur Verfügung zu stellen, die eine gegenüber vorbekannten Phosphitverbindungen verbesserte Leistung bei der Verarbeitungsstabilisierung aufweisen.

Verschiedene weitere Aufgaben und Vorteile einer Erfindung sind aus der nachfolgenden Beschreibung ersichtlich.

Die erfindungsgemäßen Verbindungen entsprechen der Formel:

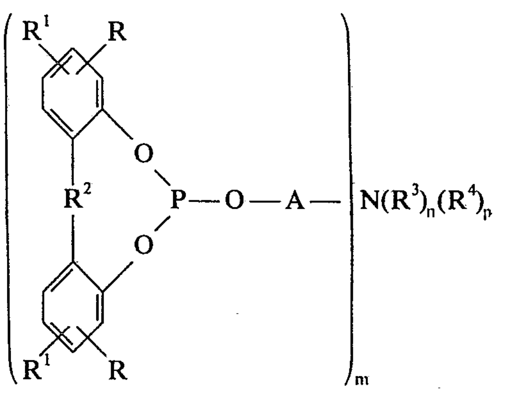

solcher Art, daß n = 1 und p = 1 sind, wenn m = 1, n = 1 und p = 0 sind, wenn m = 2, und n und p null sind, wenn m = 3, und worin R für eine Alkylgruppe mit 1 bis 18 Kohlenstoffatomen, $R^1$ für Wasserstoff oder eine Alkylgruppe mit 1 bis 18 Kohlenstoffatomen, $R^2$ für eine direkte Bindung oder Alkylen mit 1 bis 12 Kohlenstoffatomen, A für Alkylen mit 1 bis 6 Kohlenstoffatomen oder Cycloalkylen mit 5 bis 6 Kohlenstoffatomen und $R^3$ für Alkyl mit 1 bis 18 Kohlenstoffatomen oder

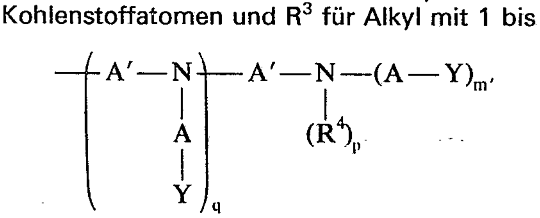

stehen, wobei Y

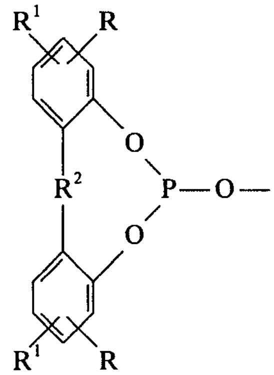

und A' Alkylen mit 1 bis 6 Kohlenstoffatomen oder Cycloalkylen mit 5 bis 6 Kohlenstoffatomen darstellen, m' 1 oder 2, p' 0 oder 1 und q 0—5 sind sowie A, R, $R^1$ und $R^2$ die oben angegebene Bedeutung haben, mit der Maßgabe daß, wenn p, p' und q 0 sind, $-N-A'-N$ eine Diazacycloalkylgruppe mit 2 bis 10 Kohlenstoffatomen bedeuten kann oder, wenn m 1 und p 0 sind, $N-R^3$ eine Azacycloalkylgruppe mit 2 bis 10 Kohlenstoffatomen oder eine Azaoxacycloalkylgruppe mit 3 bis 7 Kohlenstoffatomen bedeutet, und $R^4$ für Alkyl mit 1 bis 18 Kohlenstoffatomen steht.

Bevorzugte Verbindungen im Rahmen der obigen Konstitution sind solche, bei denen sich R im Phenylring jeweils in der ortho-Stellung zum Phosphitsauerstoff befindet.

Die Gruppen R und $R^1$ sind vorzugsweise geradkettiges oder verzweigtes Alkyl mit 4—8 Kohlenstoffatomen, wie n-Butyl, sek.-Butyl, tert.-Butyl, tert.-Pentyl, 2-Äthylhexyl, n-Octyl und 1,1,3,3-Tetramethylbutyl. Besonders bevorzugt sind die Gruppen tert.-Butyl, tert.-Pentyl und 1,1,3,3-Tetramethylbutyl. Ferner befindet sich die Gruppe $R^1$ besonders bevorzugt in der para-Stellung zum Sauerstoff, insbesondere wenn $R^1$ tert.-Alkyl bedeutet.

$R^1$ kann zwar Wasserstoff oder Alkyl mit 1 bis 18 Kohlenstoffatomen sein, doch steht es bevorzugt für eine Alkylgruppe mit 1 bis 8 Kohlenstoffatomen, die entweder geradkettig oder verzweigt ist. Besonders bevorzugt wird tert.-Alkyl mit 4 bis 8 Kohlenstoffatomen.

$R^2$ ist vorzugsweise eine direkte Bindung oder Alkylen der Formel

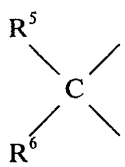

worin $R^5$ und $R^6$ unabhängig voneinander Wasserstoff, Alkyl mit 1 bis 7 Kohlenstoffatomen oder Aryl bedeuten, mit der Maßgabe, daß die Gesamtzahl Kohlenstoffatome 12 nicht übersteigt. Typische Arylgruppen sind unter anderem Phenyl, Tolyl, Mesityl, Xylyl sowie 1- bis 2-Naphthyl.

Besonders bevorzugt ist $R^2$ eine direkte Bindung, Methylen oder Äthyliden.

$R^3$ und $R^4$ sind vorzugsweise Alkyl mit 1 bis 4 Kohlenstoffatomen.

A ist vorzugsweise Äthylen oder Trimethylen.

Besonders bevorzugte, erfindungsgemäße Verbindungen sind N-Methyliminodiäthanol-bis-(3,3',5,5'-tetra-tert.-butyl-1,1'-biphenyl-2,2'-diyl)-phosphit und 2,2',2''-Nitrilotriäthanol-tris-(3,3',5,5'-tetra-tert.-butyl-1,1'-biphenyl-2,2'-diyl)-phosphit.

Die erfindungsgemäßen alkylierten 1,1'-Biphenyl-2,2'-phosphite und 2,2'-Alkyliden-bis-(alkylphenyl)-phosphite lassen sich sich dadurch herstellen, daß man ein alkyliertes 2,2'-Biphenol oder ein alkyliertes 2,2'-Alkyliden-bis-phenol gegebenenfalls in einem Lösungsmittel mit Phosphortrichlorid zum entsprechenden Phosphorchloridit umsetzt, welches man seinerseits mit einem tertiären Amino-alkoxyd oder -alkanol zum gewünschten Produkt reagieren läßt. Das Lösungsmittel ist vorzugsweise aromatisch, wie Benzol, Toluol, Xylol und dergleichen. Die Reaktionstemperatur liegt zwischen Raumtemperatur und der Rückflußtemperatur des Reaktionsmediums. Bei einer weiteren Methode zur Herstellung der erfindungsgemäßen Verbindungen handelt es sich um die Umsetzung des Phosphorchloridits mit einem geeigneten Alkanolamin in Gegenwart eines Protonenakzeptors wie eines tertiären Amins, beispielsweise Triäthylamin oder Pyridin.

Die zur Herstellung dieser Phosphite benötigten Ausgangsstoffe sind handelsüblich oder können nach bekannten Methoden hergestellt werden.

Die zur Herstellung der erfindungsgemäßen Verbindungen verwendeten Alkanolamine entsprechen den folgenden Formeln:

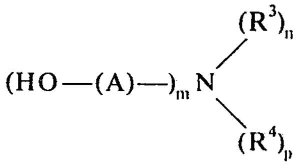

worin $R^3$ für Alkyl mit 1 bis 8 Kohlenstoffatomen steht und die übrigen Symbole die oben angegebenen Bedeutungen haben.

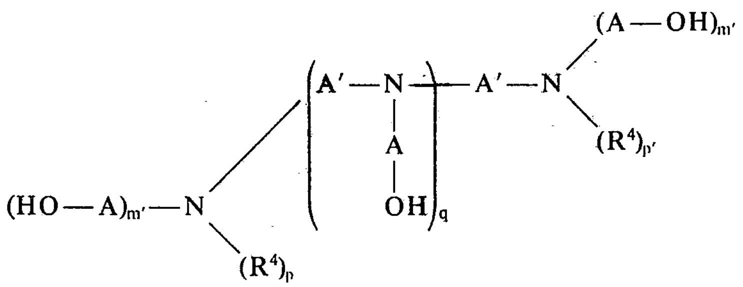

worin A' Alkylen mit 1 bis 6 Kohlenstoffatomen oder Cycloalkylen mit 5 bis 6 Kohlenstoffatomen darstellt sowie m' 1 oder 2, p und p' 0 oder 1 und q 0—5 sind, mit der Maßgabe, daß, wenn p und q Null sind, N—A'—N auch Piperazin-1,4-diyl sein kann, und

$$(HO—A)—N—R^3$$

worin N—$R^3$ eine Azacycloalkylgruppe mit 2 bis 10 Kohlenstoffatomen oder eine Azaoxacycloalkylgruppe mit 3 bis 7 Kohlenstoffatomen bedeutet.

Bevorzugte Beispiele für die Alkanolaminzwischenprodukte sind unter anderem: N-2-Hydroxyäthyl-aziridine, N-2-Hydroxypropyl-azetidine, N-2-Hydroxyäthyl-pentamethylenimin, N-2-Hydroxyäthyl-hexamethylenimin, N-3-Hydroxypropyloctamethylenimin und N-2-Hydroxyäthyl-morpholin. Ebenfalls bevorzugt werden hydroxyalkylierte Derivate von Alkyl- und Cycloalkylaminen sowie Alkylendiaminen und Polyalkylendiaminen, einschließlich N,N-Dimethyläthylolamin, N-Methyliminodiäthylol, N-Butyliminodiäthylol, N,N-Dicyclohexyliminodiäthylol, N-n-Dodecylimino-di-propyl-2-ol, N,N-Diäthyl-N',N'-bis-(2-hydroxypropyl)-äthylendiamin, Triäthylolamin, N,N,N',N'-Tetrakis-2-hydroxyäthyläthylendiamin, N,N',N''-Tris-(2-hydroxyäthyl)-N-n-octadecyl-1,3-diaminopropan, N,N'-Bis-(2-hydroxyäthyl)-piperazin, N-2-Hydroxymethylpiperidin, N,N',N''-Pentakis-(2-hydroxyäthyl)-diäthyltriamin und N,N',N'',N'''-Heptakis-(2-hydroxypropyl)-diäthylentriamin.

Die Synthese der erfindungsgemäßen Verbindungen läßt sich durch die nachfolgenden Reaktionsgleichungen (hier mit Bezug auf die bevorzugten Verbindungen abgebildet) darstellen:

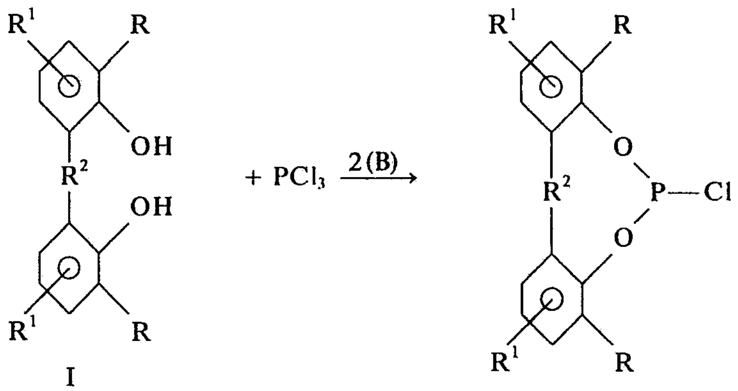


I

II

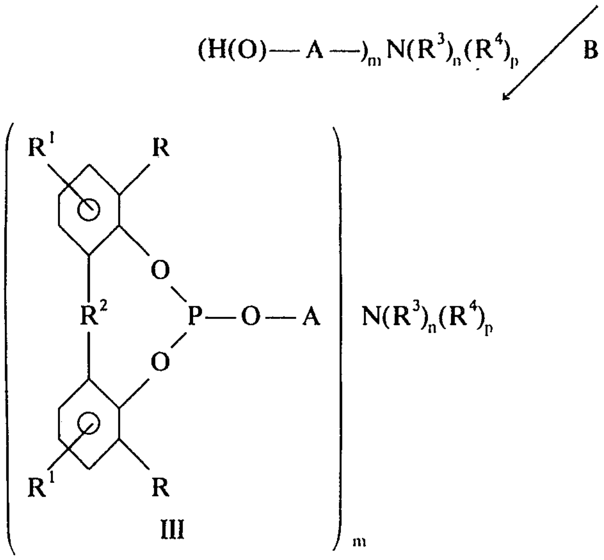

III

worin B für ein als Protonenakzeptor verwendetes cyclisches oder acyclisches tertiäres Amin wie Triäthylamin und Pyridin steht und die übrigen Symbole die oben angegebene Bedeutung haben.

Bei einer analogen synthetischen Methode wären die tertiären Amine im obigen Syntheseschema durch Alkalihydroxide oder Alkalicarbonate zu ersetzen. Die obigen Reaktionsfolgen lassen sich so durchführen, daß sie die erfindungsgemäßen Verbindungen ohne Isolierung des Chloriditzwischenprodukts II liefern.

Die erfindungsgemäßen Verbindungen sind besonders wirksam bei der Stabilisierung organischer Materialien wie Kunststoffen, Polymeren und Harzen neben Mineral- und synthetischen Flüssigkeiten wie Schmierölen, Umlaufölen und dergleichen.

Die erfindungsgemäßen Verbindungen sind besonders wertvoll als Stabilisatoren, insbesondere für den Schutz von Polyolefinen, zum Beispiel Polyäthylen, Polypropylen, Polyisobutylen, Poly-(buten-1), Poly-(penten-1), Poly-(3-methylen-1), Poly-(4-methyl-penten-1), verschiedenen Äthylen/Propylencopolymeren und dergleichen.

Weitere Substrate, bei denen sich die erfindungsgemäßen Verbindungen besonders bewähren, sind Polystyrol einschließlich schlagzähem Polystyrol, ABS-Harz, SBR, Isopren sowie Naturkautschuk und Polyester einschließlich Polyäthylen-terephthalat und Polybutylen-terephthalat einschließlich Copolymeren.

Polyurethane, Polycarbonate, Polyamide wie Nylon-6 und -6/6 und dergleichen sowie Copolyamide und Polysulfone werden ebenfalls stabilisiert.

Allgemein umfassen die stabilisierbaren Polymeren:

1. Monoolefin- und Diolefinpolymere, zum Beispiel Polyäthylen (gegebenenfalls vernetzt), Polypropylen, Polyisobutylen, Polybuten-1, Polymethylpenten-1, Polyisopren oder Polybutadien, sowie Cycloolefinpolymere wie beispielsweise Cyclopenten oder Norbornen.
2. Gemische der unter 1. erwähnten Polymeren, zum Beispiel Gemische von Polypropylen mit Polyäthylen oder Polyisobutylen.
3. Copolymere von Monoolefinen und Diolefinen miteinander oder mit anderen Vinylmonomeren, wie zum Beispiel Äthylen/Propylen-, Propylen/Buten-1-, Propylen/Isobutylen-, Äthylen/Buten-1, Propylen/Butadien-, Isobutylen/Isopren-, Äthylen/Äthylacrylat-, Äthylen/Alkylmethacrylate-, Äthylen/Vinylacetat- oder Äthylen/Acrylsäurecopolymere und deren Salze (Ionomere) sowie Terpolymere des Äthylens mit Propylen und einem Dien wie Hexadien, Dicyclopentadien oder Äthylidennorbornen.
4. Polystyrol.
5. Statistische Copolymere des Styrols oder $\alpha$-Methylstyrols mit Dienen oder Acrylderivaten, wie zum Beispiel Styrol/Butadien, Styrol/Acrylnitril, Styrol/Alkylmethacrylate oder Styrol/Acrylnitril/Methacrylat; hochschlagzähe Gemische aus Styrolcopolymeren und einem anderen Polymeren wie beispielsweise einem Polyacrylat, Dienpolymer oder Äthylen/Propylen/Dienterpolymer; sowie Blockcopolymere des Styrols, wie beispielsweise Styrol/Butadien/Styrol, Styrol/Isopren/Styrol, Styrol/Äthylen/Butylen/Styrol oder Styrol/Äthylen/Propylen/Styrol.
6. Pfropfcopolymere des Styrols, wie zum Beispiel Styrol auf Polybutadien, Styrol und Acrylnitril auf Polybutadien, Styrol und Alkylacrylate oder -methacrylate auf Polybutadien, Styrol und Acrylnitril auf Äthylen/Propylen/Dienterpolymeren, Styrol und Acrylnitril auf Polyacrylaten oder Polymethacrylaten, Styrol und Acrylnitril auf Acrylat/Butadiencopolymeren, sowie deren Gemische mit den unter 5. angeführten Copolymeren, beispielsweise die als ABS-, MBS-, ASA- oder AES-Polymere bekannten Copolymergemische.
7. Halogenhaltige Polymere wie Polychloropren, chlorierte Kautschuktypen, chloriertes oder sulfochloriertes Polyäthylen, Polymere aus halogenhaltigen Vinylverbindungen, wie beispielsweise Polyvinylchlorid, Polyvinylidenchlorid, Polyvinylfluorid, Polyvinylfluorid sowie deren Copolymere wie beispielsweise Vinylchlorid/Vinylidenchlorid-, Vinylchlorid/Vinylacetat- oder Vinylidenchlorid/Vinylacetatcopolymere.

8. Von $\alpha,\beta$-ungesättigten Säuren und deren Derivaten abgeleitete Polymere wie Polyacrylate und Polymethacrylate, Polyacrylamide und Polyacrylnitril.
9. Copolymere der unter 8. erwähnten Monomeren miteinander oder mit anderen ungesättigten Monomeren wie beispielsweise Acrylnitril/Butadien-, Acrylnitril/Alkylacrylat- oder Acrylnitril/Vinylchloridcopolymere oder Acrylnitril/Alkylmethacrylat/Butadienterpolymere.
10. Von ungesättigten Alkoholen abgeleitete Polymere oder deren Acylderivate oder Acetale, wie Polyvinylalkohol, Polyvinylacetat, Polyvinylstearat, Polyvinylbenzoat, Polyvinylmaleinat, Polyvinylbutyral, Polyallylphthalat oder Polyallylmelamin.
11. Homopolymere und Copolymere cyclischer Äther wie Polyalkylenglykole, Polyäthylenoxyd, Polypropylenoxyd oder deren Copolymere mit Bis-glycidyläthern.
12. Polyacetale wie Polyoxymethylen und Äthylenoxyd als Comonomer enthaltende Polyoxymethylene.
13. Polyphenylenoxyde und -sulfide.
14. Von Polyäthylen, Polyestern oder Polybutadien abgeleitete Polyurethane mit Hydroxylendgruppen auf einer Seite und aliphatischen oder aromatischen Polyisocyanaten auf der anderen Seite sowie deren Vorstufen.
15. Von Diaminen und Dicarbonsäuren und/oder Aminocarbonsäuren oder den entsprechenden Lactamen abgeleitete Polyamide und Copolyamide, wie Polyamid-4, Polyamid-6, Polyamid-6/6, Polyamid-6/10, Polyamid-11, Polyamid-12, Poly-2,4,4-trimethylhexamethylen-terephthalamid oder Poly-m-phenylen-isophthalamid sowie deren Copolymere mit Polyäthern wie beispielsweise mit Polyäthylenglykol, Polypropylenglykol oder Polytetramethylenglykolen.
16. Polyharnstoffe, Polyimide und Polyamide-imide.
17. Von Dicarbonsäuren, Dialkoholen und/oder Hydroxycarbonsäuren oder den entsprechenden Lactonen abgeleitete Polyester, wie Polyäthylenterephthalat, Polybutylenterephthalat, Poly-1,4-dimethylol-cyclohexanterephthalat und Polyhydroxybenzoate sowie von Polyäthern mit Hydroxylendgruppen abgeleitete Blockcopolyäther-ester.
18. Polycarbonate.
19. Polysulfone und Polyäthersulfone.
20. Von Aldehyden einerseits und Phenolen, Harnstoffen und Melaminen andererseits abgeleitete, vernetzte Polymere, wie Phenol/Formaldehyd-, Harnstoff/Formaldehyd- und Melamin/Formaldehydharze.
21. Trocknende und nicht-trocknende Alkydharze.
22. Von Copolyestern gesättigter und ungesättigter Dicarbonsäuren mit mehrwertigen Alkoholen und Vinylverbindungen als Vernetzungsmittel abgeleitete ungesättigte Polyesterharze sowie deren schwerentflammbare, halogenhaltige Modifikationen.
23. Von substituierten Acrylestern abgeleitete heißhärtende Acrylharze, wie Epoxi-acrylate, Urethanacrylate, oder Polyester-acrylate.
24. Alkydharze, Polyesterharze oder Acrylatharze im Gemisch mit Melaminharzen, Harnstoffharzen, Polyisocyanaten oder Epoxidharzen als Vernetzungsmittel.
25. Von Polyepoxiden, zum Beispiel Bis-glycidyläthern oder cycloaliphatischen und aromatischen Diepoxiden abgeleitete vernetzte Epoxidharze.
26. Natürliche Polymere, wie Cellulose, Kautschuk, Gelatine und deren polymerhomolog chemisch abgewandelte Derivate, wie Celluloseacetate, Cellulosepropionate und Cellulosebutyrate, oder Celluloseäther wie Methylcellulose.
27. Natürlich vorkommende und synthetische organische Materialien, die reine monomere Verbindungen oder Gemische solcher Verbindungen darstellen, beispielsweise Mineralöle, tierische und pflanzliche Fette, Öle und Wachse, oder Öle, Fette und Wachse auf Grundlage synthetischer Ester (z. B. Phthalate, Adipate, Phosphate oder Trimellithate) sowie Gemische synthetischer Ester mit Mineralölen in beliebigen Gewichtsverhältnissen, wobei diese Materialien als Weichmacher für Polymere oder als Textilspinnöle verwendbar sind, sowie wäßrige Emulsionen solcher Materialien.
28. Wäßrige Emulsionen von Natur- oder Synthesekautschuk, z. B. natürlicher Latex, oder ein Latex aus carboxylierten Styrol/Butadiencopolymeren.

Im allgemeinen setzt man etwa 0,01 bis etwa 5 Gew.-% der erfindungsgemäßen Stabilisatoren ein, bezogen auf die stabilisierte Zusammensetzung, doch hängt dies jeweils vom Substrat und der Anwendung ab. Ein bevorzugter Bereich erstreckt sich von etwa 0,05 bis zu etwa 2%, und insbesondere 0,1 bis etwa 1%.

Die erfindungsgemäßen Verbindungen stabilisieren Polymere insbesondere während der Verarbeitung bei hohen Temperaturen mit verhältnismäßig geringer Farbänderung, obwohl das Polymer gegebenenfalls mehrfach extrudiert wird. Zu Polymeren, bei denen diese Eigenschaft besonders in Erscheinung tritt, gehören Polypropylen, Polyäthylen, Styroltypen wie ABS, Polyäthylen- und Polybutylenterephthalate, Polycarbonate, Naturkautschuk und Synthesekautschuk wie SBR. Während viele bisher als Verarbeitungsstabilisatoren verwendete Verbindungen nur in Gegenwart von Costabilisatoren wie phenolischen Antioxydantien als Verarbeitungsstabilisatoren für Polyolefine genügend wirksam sind, sind die erfindungsgemäßen Verbindungen auch in Abwesenheit phenolischer Antioxydantien wirksam.

Zahlreiche erfindungsgemäße Verbindungen kombinieren die verarbeitungsstabilisierenden Eigenschaften mit der Fähigkeit, dem Polymer Lichtstabilität zu verleihen. Dies ist bei Polymerfasern von besonderer Bedeutung, wo die Verarbeitungstemperaturen besonders hoch sind und Beständigkeit gegen aktinisches Licht ein unumgängliches Erfordernis ist. Eine besonders wichtige Eigenschaft der Stabilisatoren, die Ester des dreiwertigen Phosphors sind, besteht darin, daß sie nicht hygroskopisch und bei der Lagerung unter Umgebungsbedingungen in Gegenwart von Luftfeuchtigkeit gegen Hydrolyse beständig sind. Hygroskopizität führt häufig dazu, daß eine homogene Einarbeitung des Verarbeitungsstabilisators in das Polymer schwierig ist, was beim Kompoundieren Klebrigkeit und Verstopfung verursacht, während eine Hydrolyse der Phosphoresterstabilisatoren während der Lagerung häufig zu weniger wirksamen Massen führt.

Die erfindungsgemäßen Stabilisatoren lassen sich nach herkömmlichen Methoden in jeder zweckmäßigen Stufe vor der Herstellung von Formteilen daraus in die organischen Polymeren einarbeiten. Beispielsweise kann man den Stabilisator mit dem Polymer in trockener Pulverform oder eine Suspension oder Emulsion des Stabilisators mit einer Lösung, Suspension oder Emulsion des Polymeren vermischen. Die erfindungsgemäßen stabilisierten Polymerzusammensetzungen können gegebenenfalls verschiedene weitere herkömmliche Zusatzstoffe enthalten, wie die folgenden:

1. Antioxydantien

1.1 Einfache 2,6-Dialkylphenole wie beispielsweise 2,6-Di-tert.-butyl-4-methylphenol, 2-tert.-Butyl-4,6-dimethylphenol, 2,6-Di-tert.-butyl-4-methoxymethylphenol und 2,6-Di-octadecyl-4-methylphenol.

1.2 Derivate von alkylierten Hydrochinonen, wie beispielsweise 2,5-Di-tert.-butyl-hydrochinon, 2,5-Di-tert.-amyl-hydrochinon, 2,6-Di-tert.-butyl-hydrochinon, 2,5-Di-tert.-butyl-4-hydroxy-anisol, (3,5-Di-tert.-butyl-4-hydroxyphenyl)-phosphit, 3,5-Di-tert.-butyl-4-hydroxyphenylstearat und Bis-(3,5-di-tert.-butyl-4-hydroxyphenyl)-adipat.

1.3 Hydroxylierte Thiodiphenyläther wie beispielsweise 2,2'-Thio-bis-(6-tert.-butyl-4-methylphenol, 2,2'-Thio-bis-(4-octylphenol), 4,4'-Thio-bis-(6-tert.-butyl-3-methylphenol), 4,4'-Thio-bis-(3,6-di-sek.-amylphenol), 4,4'-Thio-bis-(6-tert.-butyl-2-methylphenol) und 4,4'-Bis-(2,6-dimethyl-4-hydroxyphenyl)-disulfid.

1.4 Alkyliden-bisphenole wie beispielsweise 2,2'-Methylen-bis-(6-tert.-butyl-4-methylphenol), 2,2'-Methylen-bis-(6-tert.-butyl-4-äthylphenol), 4,4'-Methylen-bis-(6-tert.-butyl-2-methylphenol), 4,4'-Methylen-bis-(2,6-di-tert.-butyl-phenol), 2,6-Di-(3-tert.-butyl-5-methyl-2-hydroxybenzyl)-4-methylphenol, 2,2'-Methylen-bis-[4-methyl-6-($\alpha$-methylcyclohexyl)-phenol], 1,1'-Bis-(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmerkapto-butan, 1,1,5,5-Tetra-(5-tert.-butyl-4-hydroxy-2-methylphenyl)-pentan und Äthylenglykol-bis-[3,3-bis(3'-tert.-butyl-4'-hydroxyphenyl)-butyrat].

1.5 O-, N- und S-Benzylverbindungen wie beispielsweise 3,3',5,5'-Tetra-tert.-butyl-4,4'-dihydroxydibenzyläther, Octadecyl-4-hydroxy-3,5-dimethylbenzyl-merkaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

1.6 Hydroxybenzylierte Malonate wie beispielsweise Dioctadecyl-2,2-bis-(3,5-di-tert.-butyl-2-hydroxybenzyl)-malonat, Dioctadecyl-2-(3-tert.-butyl-4-hydroxy-5-methylbenzyl)-malonat, Didodecyl-merkaptoäthyl-2,2-bis-(3,5-di-tert.-butyl-4-hydroxy-benzyl)-malonat und Di-[4-(1,1,3,3-tetramethylbutyl)-phenyl]-2,2-bis-(3,5-di-tert.-butyl-4-hydroxybenzyl)-malonat.

1.7 Hydroxybenzyl-aromatische Verbindungen wie beispielsweise 1,3,5-Tris-(3,5-di-tert.-butyl-4-hydroxybenzyl)-2,4,6-trimethylbenzol, 1,4-Bis-(3,5-di-tert.-butyl-4-hydroxybenzyl)-2,3,5,6-tetramethylbenzol und 2,4,6-Tris-(3,5-di-tert.-butyl-4-hydroxybenzyl)-phenol.

1.8 s-Triazinverbindungen wie beispielsweise 2,4-Bis-octylmerkapto-6-(3,5-di-tert.-butyl-4-hydroxyanilino)-s-triazin, 2-Octylmerkapto-4,6-bis-(3,5-di-tert.-butyl-4-hydroxyanilino)-s-triazin, 2-Octylmerkapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenyläthyl)-s-triazin und 1,3,5-Tris-(3,5-di-tert.-butyl-4-hydroxybenzyl)-isocyanurat.

1.9 Amide der $\beta$-(3,5-Di-tert.-butyl-4-hydroxyphenyl)-propionsäure, wie beispielsweise 1,3,5-Tris-(3,5-di-tert.-butyl-4-hydroxyphenyl-propionyl)-hexahydro-s-triazin, N,N'-Di-(3,5-di-tert.-butyl-4-hydroxyphenylpropionyl)-hexamethylendiamin und N,N'-Bis-$\beta$-(3,5-di-t-butyl-4-hydroxyphenyl-propionyl)-hydrazin.

1.10 Ester der $\beta$-(3,5-Di-tert.-butyl-4-hydroxyphenyl)-propionsäure mit einwertigen oder mehrwertigen Alkoholen wie beispielsweise Methanol, Äthanol, Octadecanol, 1,6-Hexandiol, 1,9-Nonandiol, Äthylenglykol, 1,2-Propandiol, Diäthylenglykol, Triäthylenglykol, Thiodiäthylenglykol, Neopentylglykol, Pentaerythrit, 3-Thiaundecanol, 3-Thia-pentadecanol, Trimethylhexandiol, Trimethyloläthan, Trimethylolpropan, Tris-hydroxyäthyl-isocyanurat und 4-Hydroxymethyl-1-phopha-2,6,7-trioxacyclo[2,2,2]octan.

1.11 Ester der $\beta$-(5-tert.-Butyl-4-hydroxy-3-methylphenyl)-propionsäure mit einwertigen oder mehrwertigen Alkoholen wie beispielsweise Methanol, Äthanol, Octadecanol, 1,6-Hexandiol, 1,9-Nonandiol, Äthylenglykol, 1,2-Propandiol, Diäthylenglykol, Triäthylenglykol, Thiodiäthylenglykol, Neopentylglykol, Pentaerythrit, 3-Thiaundecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2,2,2]octan.

1.12 Ester der 3,5-Di-tert.-butyl-4-hydroxyphenyl-essigsäure mit einwertigen oder mehrwertigen Alkoholen wie beispielsweise Methanol, Äthanol, Octadecanol, 1,6-Hexandiol, 1,9-Nonandiol, Äthylenglykol, 1,2-Propandiol, Diäthylenglykol, Thiodiglykol, Neopentylglykol, Pentaerythrit, 3-Thia-undecanol, 3-Thia-pentadecanol, Trimethylhexandiol, Trimethyloläthan, Trimethylolpropan, Tris-hydroxyäthyl-isocyanurat und 4-Hydroxymethyl-1-phospha-2,6,7-trioxabicyclo[2,2,2]octan, insbesondere der Tetra-bis-ester des Pentaerythrits.

1.13 Benzylphosphonat wie beispielsweise Dimethyl-3,5-di-tert.-butyl-3-hydroxybenzylphosphonat, Diäthyl-3,5-di-tert.-butyl-4-hydroxybenzylphosphonat, Dioctadecyl-3,5-di-tert.-butyl-4-hydroxybenzylphosphonat und Dioctadecyl-5-tert.-butyl-4-hydroxy-3-methylbenzylphosphonat.

Die folgenden seien als Beispiele für weitere, zusammen mit dem erfindungsgemäßen Stabilisator und dem Antioxydans verwendbare Zusatzstoffe genannt:

1. Aminoarylderivate, z. B. Phenyl-1-naphthylamin, Phenyl-2-naphthylamin, N,N'-Di-phenyl-p-phenyldiamin, N,N'-Di-1-naphthyl-p-phenylendiamin, N,N'-Di-2-naphthyl-p-phenylendiamin, N,N'-Di-sek.-butyl-p-phenylendiamin, 6-Äthoxy-2,2,4-trimethyl-1,2-dihydrochinolin, 6-Dodecyl-2,2,4-trimethyl-1,2-dihydrochinolin, Mono- und Dioctyliminodibenzyl, polymerisiertes 2,2,4-Trimethyl-1,2-dihydrochinolin, octyliertes Diphenylamin, nonyliertes Diphenylamin, N-Phenyl-N'-cyclohexyl-p-phenylendiamin, N-Phenyl-N'-isopropyl-p-phenylendiamin, N,N'-Di-sek.-octyl-p-phenylendiamin, N-Phenyl-N'-sek.-octyl-p-phenylendiamin, N,N'-Di-(1,4-dimethylpentyl)-p-phenylendiamin, N,N'-Dimethyl-N,N'-di-(sek.-octyl)-p-phenylendiamin, 2,6-Dimethyl-4-methoxyanilin, 4-Äthoxy-N-sek.-butylanilin, ein Diphenylamin/Acetonkondensationsprodukt, Aldol-1-naphthylamin und Phenothiazin.
Bei Verwendung der obigen Antioxydantien sind Verfärbungseffekte zu berücksichtigen.

2. UV-Absorber und Lichtschutzmittel

2.1 2-(2'-Hydroxyphenyl)-benztriazole, z. B. das 5'-Methyl-, 3',5'-Di-tert.-butyl-, 5'-tert.-Butyl-, 5'-(1,1,3,3-Tetramethylbutyl)-, 5-Chlor-3',5'-di-tert.-butyl-, 5-Chlor-3'-tert.-butyl-5'-methyl-, 3'-sek.-Butyl-5'-tert.-butyl-, 3'-$\alpha$-Methylbenzyl-5'-methyl-, 3'-$\alpha$-Methylbenzyl-5'-methyl-5-chlor-, 4'-Hydroxy-, 4'-Methoxy-, 4'-Octoxy-, 3',5'-Di-tert.-amyl-, 3'-Methyl-5'-carbomethoxyäthyl-, 5-Chlor-3',5'-di-tert.-amyl-, 3',5'-Bis-($\alpha$,$\alpha$-dimethylbenzyl)-, 3',5'-Bis($\alpha$,$\alpha$-dimethylbenzyl)-5-chlor-, 3',5'-Di-(1,1,3,3-tetramethylbutyl)-phenyl- und 3',5'-Di-(1,1,3,3-tetramethylbutyl)-phenyl-5-chlor-derivat.

2.2 2,4-Bis-(2'-hydroxyphenyl)-6-alkyl-s-triazine, z. B. das 6-Äthyl-, 6-Heptadecyl- oder 6-Undecylderivat.

2.3 Hydroxybenzophenone, z. B. das 4-Hydroxy-, 4-Methoxy-, 4-Octoxy-, 4-Decyloxy-, 4-Dodecyloxy-, 4-Benzyloxy-, 2',4,4'-Trihydroxy- oder 2'-Hydroxy-4,4'-dimethoxyderivat.

2.4 1,3-Bis-(2'-hydroxybenzoyl)-benzole, z. B. 1,3-Bis-(2'-hydroxy-4'-hexyloxy-benzoyl)-benzol, 1,3-Bis-(2'-hydroxy-4'-octyloxy-benzoyl)-benzol oder 1,3-Bis-(2'-hydroxy-4'-dodecyloxy-benzoyl)-benzol.

2.5 Ester gegebenenfalls substituierter Benzoesäuren, z. B. Phenylsalicylat, Octylphenylsalicylat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester oder -octadecylester oder -2-methyl-4,6-di-tert.-butylester.

2.6 Acrylate, z. B. $\alpha$-Cyan-$\beta$,$\beta$-diphenylacrylsäureäthylester oder -isooctylester, $\alpha$-Carbomethoxy-zimtsäuremethylester, $\alpha$-Cyan-$\beta$-methyl-p-methoxyzimtsäuremethylester oder -butylester oder N-($\beta$-Carbomethoxyvinyl)-2-methyl-indolin.

2.7 Sterisch gehinderte Amine, z. B. 4-Benzoyl-2,2,6,6-tetramethylpiperidin, 4-Stearyloxy-2,2,6,6-tetramethylpiperidin, Bis-(2,2,6,6-tetramethylpiperidyl)-sebacinat oder 3-n-Octyl-7,7,9,9-tetramethyl-1,3,8-triazaspiro[4,5]decan-2,4-dion.

2.8 Oxalsäurediamide, z. B. 4,4'-Di-octyloxyoxanili, 2,2'-Di-dodecyloxy-5,5'-di-tert.-butyl-oxanilid, 2-Äthoxy-2'-äthyl-oxanilid, N,N'-Bis-(3-dimethylaminopropyl)-oxalamid, 2-Äthoxy-2'-äthyl-5,4'-di-tert.-butyl-oxanilid oder Gemische von ortho- und para-methoxy- sowie o- und p-äthoxydisubstituierten Oxaniliden.

3. Metalldesaktivatoren, z. B. Oxanilid, Isophthalsäuredihydrazid, Sebacinsäure-bis-phenylhydrazid, Bis-benzyliden-oxalsäuredihydrazid, N,N'-Diacetyladipinsäuredihydrazid, N,N'-Bis-salicyloyl-

oxalsäuredihydrazid, N,N'-Bis-salicyloylhydrazin, N,N'-Bis-(3,5-di-tert.-butyl-4-hydroxyphenylpropionyl)-hydrazin, N-Salicyloyl-N'-salicylalhydrazin, 3-Salicyloyl-amino-1,2,4-triazol oder N,N'-Bis-salicyloyl-thiopropionsäuredihydrazid.

4. Basische Costabilisatoren, z. B. Alkali- und Erdalkalisalze höherer Fettsäuren, beispielsweise Ca-Stearat, Zn-Stearat, Mg-Behenat, Na-Ricinoleat oder K-Palmitat.
5. Keimbildungsmittel, z. B. 4-tert.-Butylbenzoesäure, Adipinsäure oder Diphenylessigsäure.
6. Phosphite, wie zum Beispiel Triphenylphosphit, Diphenylalkyl-phosphite, Phenyldialkyl-phosphite, Tri-(nonylphenyl)-phosphit, Trilauryl-phosphit, Trioctadecyl-phosphit, 3,9-Isodecyloxy-2,4,8,10-tetraoxa-3,9-diphosphaspiro[5,5]undecan und Tri-(4-hydroxy-3,5-di-tert.-butylphenyl)-phosphit.

Weitere Zusatzstoffe, die in die stabilisierten Zusammensetzungen eingearbeitet werden können, sind Thiosynergisten wie Dilaurylthiodipropionat oder Distearylthiodipropionat, Schmiermittel wie Stearylalkohol, Füllstoffe, Ruß, Asbest, Kaolin, Talkum, Glasfasern, Pigmente, optische Aufheller, Flammschutzmittel und Antistatika.

Die erfindungsgemäßen Verbindungen lassen sich für sich allein als einziger Stabilisator mit hauptsächlich einer Antioxydansfunktion oder einer lichtstabilisierenden Funktion anwenden, oder der Stabilisator kann als Antioxydans und Lichtstabilisator nützlich sein. Man kann die Stabilisatoren mit phenolischen Antioxydantien, Gleitmitteln wie Calciumstearat, Pigmenten, Färbemitteln oder Farbstoffen, UV-Absorbern, Lichtstabilisatoren wie sterisch gehinderten Aminen, Metalldesaktivatoren, Talkum und sonstigen Füllstoffen usw. verwenden.

Die vorliegenden Phosphite sind zwar vorteilhaft als Stabilisatoren für eine Reihe von Substraten, insbesondere den Polyolefinen, sowohl für sich als auch zusammen mit anderen Begleitzusatzstoffen verwendbar, doch verleiht die Kombination der vorliegenden Phosphite mit ausgewählten sterisch gehinderten phenolischen Antioxydantien solchen Substraten verstärkten und besonders nutzbringenden Schutz. Phenolische Antioxydantien aus der Gruppe 2,6-Di-tert.-butyl-4-methylphenol, 4,4'-Thio-bis-(6-tert.-butyl-3-methylphenol), 2,2'-Methylen-bis-(6-tert.-butyl-3-methylphenol), 4,4'-Methylen-bis-(2,6-di-tert.-butylphenol), 1,1,3-Tris-(5-tert.-butyl-4-hydroxy-2-methylphenyl)-butan, 1,3,5-Tris-(3,5-di-tert.-butyl-4-hydroxybenzyl)-2,4,6-trimethylbenzol, 2-Octylthio-4,6-bis-(3,5-di-tert.-butyl-4-hydroxyanilino)-s-triazin, n-Octadecyl-3,5-di-tert.-butyl-4-hydroxyhydrocinnamat, Neopentantetrayl-tetrakis-(3,5-di-tert.-butyl-4-hydroxy-hydrocinnamat), 1,3,5-Tris-(3,5-di-tert.-butyl-4-hydroxybenzyl)-isocyanurat, Thiodiäthylen-bis-(3,5-di-tert.-butyl)-4-hydroxy-hydrocinnamat), β-(3,5-Di-tert.-butyl-4-hydroxyphenyl)-propionsäure-tris-(2-hydroxyäthyl)-isocyanuratester, 6,6-Äthyliden-bis-(2,4-di-tert.-butylphenol), 6,6'-Methylen-bis-(2,4-di-tert-butylphenol) und 1,3,5-Tris-(4-tert.-butyl-3-hydroxy-2,6-dimethylbenzyl)-isocyanurat haben sich als besonders nützlich erwiesen.

Die Zusammensetzungen bestehen aus (a) einem Substrat, vorzugsweise einem Polyolefin wie Polypropylen, (b) etwa 0,01 bis etwa 5 Gew.-%, bezogen auf die Zusammensetzung, vorzugsweise etwa 0,025 bis etwa 2% und besonders bevorzugt 0,025 bis 1%, einer vorliegenden Phosphitverbindung oder eines Gemischs von solchen sowie gegebenenfalls (c) einem phenolischen Antioxydans oder eines Gemischs solcher Antioxydantien aus der gerade oben angegebenen Gruppe ebenfalls im Bereich von 0,01 bis 5 und vorzugsweise 0,05 bis 1 Gew.-%, bezogen auf die Zusammensetzung.

Ebenfalls werden die folgenden Lichtschutzmittel entweder für sich oder zusammen mit den angeführten phenolischen Antioxydantien vorzugsweise als Zusatzstoffe zur Einarbeitung mit den erfindungsgemäßen Phosphiten in die angegebenen Substrate verwendet: 2-(2'-Hydroxy-5'-methylphenyl)-benztriazol, 2-(3',5'-Di-tert.-butyl-2'-hydroxyphenyl)-benztriazol, 2-(2'-Hydroxy-3',5'-di-tert.-amylphenyl)-benztriazol, Nickel-Bis-[0-äthyl-(3,5-di-tert.-butyl-4-hydroxybenzyl)]-phosphonat, Bis-(1,2,2,6,6-pentamethyl-4-piperidyl)-2-n-butyl-2-(3,5-di-tert.-butyl-4-hydroxybenzyl)-malonat, Bis-(2,2,6,6-tetramethyl-4-piperidyl)-sebacinat, Polymer aus Bernsteinsäuredimethylester und 4-Hydroxy-2,2,6,6-tetramethyl-1-piperidinäthanol sowie Polymer aus 2,4-Dichlor-6-octylamino-s-triazin und N'-(2,2,6,6-Tetramethyl-4-piperidyl)-hexamethylendiamin.

Die nachfolgenden Beispiele erläutern bevorzugte Ausführungsformen der Erfindung. Dabei sind Teile stets Gewichtsteile, falls nicht anders angegeben.

## Beispiel A

### Herstellung von (3,3',5,5'-Tetra-tert.-butyl-1,1'-biphenyl-2,2'-diyl)-phosphorchloridit

Man tropft 45,21 Gramm Phosphortrichlorid in 50 ml Toluol im Verlauf von 85 Minuten in eine Lösung von 123,0 Gramm 4,4',6,6'-Tetra-tert.-butyl-2,2'-biphenol und 60,6 Gramm Triäthylamin in etwa 600 ml Toluol und rührt über Nacht (etwa 20 Stunden) bei Raumtemperatur. Das Triäthylaminhydrochlorid wird vom Reaktionsprodukt abfiltriert und das gewünschte Produkt durch Entfernung des Lösungsmittels bei vermindertem Druck gewonnen, wobei man einen Feststoff vom Schmelzpunkt 168—174° erhält.

Analyse:
Berechnet: Cl 7,46%
Gefunden: Cl 7,50%

Auf ähnliche Weise werden die folgenden Phosphorchloridite der Konstitution II hergestellt.

*) (2,2'-Methylen-bis-[4,6-di-tert.-butylphenyl])-phosphorchloridit, Schmelzpunkt 207—217°C.
*) (2,2'-Äthyliden-bis[4,6-di-tert.-butylphenyl])-phosphorchloridit.
*) (2,2'-Methylen-bis-[4,6-di-tert.-amylphenyl])-phosphorchloridit.
(3,3'-Di-tert.-butyl-5.5'-dimethyl-1,1'-biphenyl-2,2'diyl)-phosphorchloridit.
(2,2'-Methylen-bis-[4-tert.-butyl-6-methylphenyl])-phosphorchloridit.
*) (2,2'-n-Butyliden-bis-[4,6-di-tert.-butylphenyl])-phosphorchloridit.
*) [3,3',5,5'-Tetra-(1,1,3,3-tetramethylbutyl)-1,1'-biphenyl-2,2'-diyl]-phosphorchloridit.
*) (2,2'-Methylen-bis-[4,6-di-(1,1,3,3-tetramethylbutyl)-phenyl])-phosphorchloridit.

*) Durch die IR Spektren charakterisiert.

Beispiel 1

N-Methyliminodiäthylol-bis-(3,3',5,5'-tetra-tert.-butyl-1,1'-biphenyl-2,2'-diyl)-phosphit

Ein mit einer Flamme getrockneter Kolben wird unter Stickstoff mit 6,87 Gramm Phosphortrichlorid, 10,12 Gramm Triäthylamin und 100 ml Toluol beschickt. Man versetzt mit einer Lösung von 20,53 Gramm 2,2',4,4'-Tetra-tert.-butyl-o,o'-bisphenol in 80 ml warmem Toluol. Man erhitzt den Ansatz auf 40°C, bis die Hydroxylabsorption in den IR-Spektren verschwunden ist. Dann gibt man eine Lösung von 2,98 Gramm 2,2'-Methyliminodiäthylol in 5,06 Gramm Triäthylamin dazu. Man erhitzt auf 40°C, bis die Reaktion gemäß DSC vollständig ist. Das Gemisch wird filtriert, am Rotationsverdampfer eingedampft und aus 9 : 1 Acetonitril : Toluol umkristallisiert, wobei man 18, 1 Gramm weißes Pulver erhält (Ausbeute 72,9%). Schmelzpunkt 134—140°C.

Analyse:
Berechnet für $C_{61}H_{91}NO_6P_2$: C 73,54; H 9,21; N 1,41.
Gefunden: C 73,63; H 8,93; N 1,37.

Beispiel 2

N-Methyliminodiäthylol-bis-[2,2'-methylen-bis-(4,6-di-tert.-butylphenyl-2,2'-diyl)]-phosphit

Man verfährt wie in Beispiel 1, unter Verwendung von 6,87 Gramm Phosphortrichlorid, 15,18 Gramm Triäthylamin, 21,27 Gramm 2,2'-Methylen-bis-(4,6-di-tert.-butylphenol) und 2,98 Gramm N-Methyliminodiäthylol.

Das Reaktionsprodukt wird zweimal aus 95 : 5 Heptan : Toluol umkristallisiert, wobei man ein weißes Pulver vom Schmelzpunkt 219—221°C erhält.

Analyse:
Berechnet für $C_{63}H_{95}NO_6P_2$: C 73,87; H 9,35; N 1,37.
Gefunden: C 73,88; H 9,49; N 1,37.

Beispiel 3

2,2',2''-Nitriloltriäthylol-tris-[2,2'-methylen-bis-(4,6-di-tert.-butylphenyl-2,2'-diyl)]-phosphit

Man verfährt wie in Beispiel 1, unter Verwendung von 8,24 Gramm Phosphortrichlorid, 18,21 Gramm Triäthylamin, 25,48 Gramm 2,2'-Methylen-bis-(4,6-di-tert.-butylphenol) und 2,98 Gramm Triäthylolamin. Das Reaktionsprodukt wird aus 2-Butanon umkristallisiert, wobei man ein weißes Pulver vom Schmelzpunkt 177—181°C erhält.

Analyse:
Berechnet für $C_{93}H_{138}NO_9P_3$: C 74,12; H 9,23; N 0,93.
Gefunden: C 74,17; H 9,10; N 0,79.

Beispiel 4

2,2',2"-Nitrilotriäthylol-tris-(3,3',5,5'-tetra-tert.-butyl-1,1'-biphenyl-2,2'-diyl)-phosphit

Man verfährt wie in Beispiel 1, unter Verwendung von 6,87 Phosphortrichlorid, 15,18 Gramm Triäthylamin, 20,53 Gramm 2,2',4,4'-Tetra-tert.-butyl-o,o'-biphenol und 2,49 Gramm Triäthylolamin. Das Reaktionsprodukt wird zweimal aus Acetonitril : Toluol umkristallisiert, wobei man ein weißes Pulver vom Schmelzpunkt 121—134°C erhält.

Analyse:

| | | | |
|---|---|---|---|
| Berechnet für $C_{90}H_{132}NO_9P_3$: | C 73,79; | H 9,08; | N 0,96. |
| Gefunden: | C 73,89; | H 8,79; | N 1,06. |

Beispiel 5

N,N-Dimethylaminoäthylol-(3,3',5,5'-tetra-tert.-butyl-1,1'-biphenyl-2,2'-diyl)-phosphit

Man verfährt wie in Beispiel 1, unter Verwendung von 6,87 Gramm Phosphortrichlorid, 15,10 Gramm Triäthylamin, 20,50 Gramm 2,2',4,4'-Tetra-tert.-butyl-o,o'-biphenol und 4,46 Gramm N,N'-Dimethyläthylolamin. Das Reaktionsprodukt wird zweimal aus Acetonitril umkristallisiert, wobei man ein weißes Pulver vom Schmelzpunkt 120—125°C erhält.

Analyse:

| | | | |
|---|---|---|---|
| Berechnet für $C_{32}H_{50}NO_3P$: | C 72,83; | H 9,55; | N 2,65. |
| Gefunden: | C 72,79; | H 9,66; | N 2,71. |

Beispiel 6

2,2',2"-Nitrilotriäthylol-tris-[2,2'-äthyliden-bis-(4,6-di-tert.-butylphenyl)]-phosphit

Man verfährt wie in Beispiel 1, unter Verwendung von 13,75 Gramm Phosphortrichlorid, 30,36 Gramm Triäthylamin, 43,87 Gramm 2,2'-Äthyliden-bis-(4,6-di-tert.-butylphenol) und 4,97 Gramm Triäthylolamin. Das Reaktionsprodukt wird aus 2-Butanon umkristallisiert, wobei man ein weißes Pulver vom Schmelzpunkt 241—246°C erhält.

Analyse:

| | | | |
|---|---|---|---|
| Berechnet für $C_{96}H_{144}NO_9P_3$: | C 74,43; | H 9,37; | N 0,90. |
| Gefunden: | C 74,76; | H 9,37; | N 0,85. |

Beispiel 7

N-Methyliminodiäthylol-bis-[2,2'-äthyliden-bis-(4,6-di-tert.-butylphenyl)]-phosphit

Man verfährt wie in Beispiel 1, unter Verwendung von 27,47 Gramm Triäthylamin, 87,74 Gramm 2,2'-Äthyliden-bis-(4,6-di-tert.-butylphenol) und 11,92 Gramm 2,2'-Methyliminodiäthylol. Das Reaktionsprodukt wird aus 1 : 1 Acetonitril : Toluol umkristallisiert, wobei man ein weißes Pulver vom Schmelzpunkt 246—254°C erhält.

Analyse:

| | | | |
|---|---|---|---|
| Berechnet für $C_{65}H_{99}NO_6P_2$: | C 74,18; | H 9,48; | N 1,33. |
| Gefunden: | C 74,44; | H 9,53; | N 1,43. |

Beispiel 8

2,2',2"-Nitrilotri-propylol-2-tris-[2,2'-methylen-bis-(4,6-di-tert.-butylphenyl)]-phosphit

Man verfährt wie in Beispiel 1, unter Verwendung von 27,47 Gramm Phosphortrichlorid, 60,72 Gramm Triäthylamin, 84,93 Gramm 2,2'-Methylen-bis-(4,6-di-tert.-butylphenol) und 12,76 Gramm 1,1',1"-Nitrilotri-propylol-2-. Das Reaktionsprodukt wird aus Aceton und 2-Butanon umkristallisiert, wobei man ein weißes Pulver vom Schmelzpunkt 173—178°C erhält.

Analyse:

Berechnet für $C_{96}H_{144}NO_9P_3$: C 74,43; H 9,37; N 0,90.
Gefunden: C 74,38; H 9,05; N 0,84.

Beispiel 9

2,2',2"-Nitrilotri-propylol-2-tris-[2,2'-äthylen-bis-(4,6-di-tert.-butylphenyl)]-phosphit

Man verfährt wie in Beispiel 1, unter Verwendung von 27,47 Gramm Phosphortrichlorid, 60,72 Gramm Triäthylamin, 87,47 Gramm 2,2'-Äthyliden-bis-(4,6-di-tert.-butylphenol) und 12,76 Gramm 1,1',1"-Nitrilotri-propylol-2-. Das Reaktionsprodukt wird aus Aceton und Aceton/Toluol umkristallisiert, wobei man ein weißes Pulver vom Schmelzpunkt 165—170°C erhält.

Analyse:

Berechnet für $C_{99}H_{150}NO_9P_3$: C 74,73; H 9,50; N 0,88.
Gefunden: C 74,66; H 9,22; N 0,95.

Die folgenden Verbindungen der in III gezeigten Konstitution, wobei die Symbole in Tabelle I definiert sind, werden gemäß der Arbeitsweise von Beispiel 1 hergestellt.

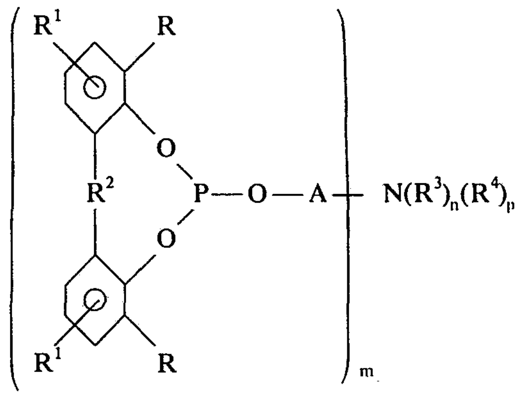

(III)

Tabelle I

| Beispiel Nr. | $R^1$ | R | $R^2$ | m | $R^3$ und/oder $R^4$ | n | p | A | Schmelzpunkt °C |
|---|---|---|---|---|---|---|---|---|---|
| 10 | $(CH_3)_3C—$ | $(CH_3)_3C—$ | — | 2 | $CH_3(CH_2)_3—$ | 1 | 0 | $—CH_2—CH_2—$ | 163–165 |
| 11 | $(CH_3)_3C—$ | $(CH_3)_3C—$ | $—CH_2—$ | 2 | $CH_3(CH_2)_3—$ | 1 | 0 | $—CH_2—CH_2—$ | 213–215 |
| 12 | 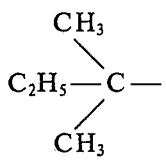 | 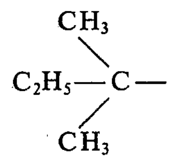 | $—CH_2—$ | 2 | $CH_3—$ | 1 | 0 | $—CH_2—CH_2—$ | 147–150 |
| 13 | 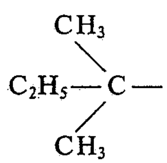 | 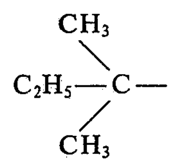 | $CH_2$ | 3 | — | 0 | 0 | $—CH_2—CH_2—$ | 206–210 |
| 14 | $(CH_3)_3C—$ | $(CH_3)_3C—$ | 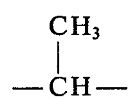 | 2 | $CH_2(CH_2)_3—$ | 1 | 0 | $—CH_2—CH_2—$ | 190–92 |
| 15 | 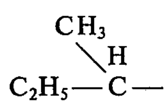 | $(CH_3)_3C—$ | 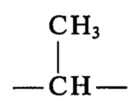 | 2 | $CH_3—$ | 1 | 0 | $—CH_2—CH_2—$ | 227–32 |
| 16 | $(CH_3)_3C—$ | $(CH_3)_3C—$ | 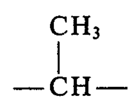 | 1 | $C_2H_5—$ | 1 | 1 | $—CH_2—CH_2—$ | 153–155 |
| 17 | 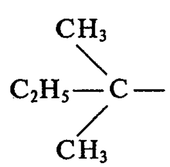 | 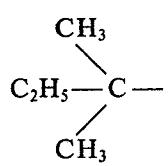 | 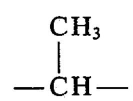 | 2 | $CH_3—$ | 1 | 0 | $—CH_2—CH_2—$ | 160–72 |

Fortsetzung

| Beispiel Nr. | $R^1$ | R | $R^2$ | m | $R^3$ und/oder $R^4$ | n | p | A | Schmelz-punkt °C |
|---|---|---|---|---|---|---|---|---|---|
| 18 | $(CH_3)_3C-CH_2-C(CH_3)_2$ (mit Bindungsstrich nach unten an C) | wie $R^1$ | — | 2 | $CH_3-$ | 1 | 0 | $-(CH_2)_6-$ | |
| 19 | $n\text{-}C_{18}H_{37}-$ | $n\text{-}C_{18}H_{37}$ | $-CH_2-$ | 1 | $CH_3-$ | 1 | 1 | $-(CH_2)_3-$ | |
| 20 | $CH_3-$ | $(CH_3)_3C-$ | $-CH_2-$ | 3 | — | 0 | 0 | $CH_2-CH(CH_3)-$ | |

Beispiel 21

Verarbeitungsstabilität von Polypropylen

Grundformulierung:

| | |
|---|---|
| Polypropylen*) | 100 Teile |
| Calciumstearat | 0,10 Teil |
| 2,6-Di-tert.-butyl-4-methylphenol | 0,10 Teil |

*) Profax 6501® von der Hercules Chemical

Nach der Lösungsmittelmischmethode werden die Stabilisatoren als Lösungen in Methylenchlorid in Polypropylen eingearbeitet, und nach Entfernung des Lösungsmittels durch Abdampfen bei vermindertem Druck wird das Harz unter den folgenden Extrudierbedingungen extrudiert:

| | Temperatur (°C) |
|---|---|
| Zylinder Nr. 1 | 232 |
| Zylinder Nr. 2 | 246 |
| Zylinder Nr. 3 | 260 |
| Düse Nr. 1 | 260 |
| Düse Nr. 2 | 260 |
| Düse Nr. 3 | 260 |
| UpM | 100 |

Während der Extrusion (jeweils nach der ersten, dritten und fünften Extrusion) wird der Extruderinnendruck mittels eines Druckgebers bestimmt.

Die Fließfähigkeit (MFR) wird nach der ASTM-Methode 1238, Bedingungen L, bestimmt. Die Fließfähigkeit ändert sich umgekehrt dem Druck am Druckgeber, und diese beiden stellen ein Maß für das Molekulargewicht eines speziellen Polymertyps dar. Die Ergebnisse sind in Tabelle II zu finden.

Diese Arbeitsweise wird dann unter Verwendung von 0,10 Teil verschiedener Costabilisatoren (A—F) anstelle von 2,6-Di-tert.-butyl-4-methylphenol wiederholt. Die Ergebnisse bezüglich der Verwendung dieser Costabilisatoren sind in Tabellen II A—II F angegeben, wie folgt:

- mit Costabilisator A: Pentaerythrityl-tetrakis-[3-(3',5'-di-tert.-butyl-4'-hydroxyphenyl)-propionat] in Tabelle II A;
- mit Costabilisator B: 1,3,5-Tris-(3,5-di-tert.-butyl-4-hydroxybenzyl)-isocyanurat in Tabelle II B;
- mit Costabilisator C: 1,3,5-Tris-(3,5-di-tert.-butyl-4-hydroxybenzyl)-2,4,6-trimethylbenzol in Tabelle II C;
- mit Costabilisator D: 6,6'-Äthyliden-bis-(2,4-di-tert.-butylphenol) in Tabelle II D;
- mit Costabilisator E: 1,3,5-Tris-(4-tert.-butyl-3-hydroxy-2,6-dimethylbenzyl)-isocyanurat in Tabelle II E;
- mit Costabilisator F: 1,1,3-Tris-(5-tert.-butyl-4-hydroxy-2-methylphenyl)-butan in Tabelle II F.

Tabelle II

Extrusionstemperatur: 260°C

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| Ohne | 52 | 56 | 54 | 1,9 | 2,7 | 3,3 |
| 0,05% Beispiel 1 | 60 | 62 | 60 | 1,5 | 1,5 | 1,9 |
| 0,05% Beispiel 3 | 61 | 60 | 59 | 1,5 | 1,8 | 2,3 |
| 0,05% Beispiel 4 | 61 | 62 | 60 | 1,5 | 1,6 | 1,9 |

Tabelle II A

mit Costabilisator A

Extrusionstemperatur: 260°C

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| Ohne | 56 | 53 | 47 | 2,7 | 3,9 | 4,9 |
| 0,05% Beispiel 1 | 60 | 60 | 58 | 1,6 | 2,2 | 2,6 |
| 0,05% Beispiel 3 | 60 | 60 | 57 | 1,7 | 2,1 | 2,8 |
| 0,05% Beispiel 4 | 60 | 60 | 58 | 1,5 | 2,1 | 2,4 |

Tabelle II B

mit Costabilisator B

Extrusionstemperatur: 260°C

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| Ohne | 56 | 52 | 47 | 3,0 | 4,4 | 5,4 |
| 0,05% Beispiel 1 | 59 | 58 | 56 | 1,9 | 2,5 | 2,8 |
| 0,05% Beispiel 3 | 59 | 58 | 56 | 2,0 | 2,3 | 2,7 |
| 0,05% Beispiel 4 | 59 | 59 | 56 | 2,0 | 2,2 | 2,6 |

Tabelle II C

mit Costabilisator C

Extrusionstemperatur: 260°C

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| Ohne | 57 | 56 | 50 | 2,4 | 3,4 | 4,1 |
| 0,05% Beispiel 1 | 62 | 62 | 61 | 1,5 | 1,6 | 2,4 |
| 0,05% Beispiel 3 | 61 | 60 | 57 | 1,5 | 2,1 | 2,2 |
| 0,05% Beispiel 4 | 60 | 62 | 61 | 1,6 | 1,7 | 2,1 |

Tabelle II D

mit Costabilisator D

Extrusionstemperatur: 260°C

| Phosphit | Druck am Druckgeber nach Extrusion (kp/cm$^2$) | | | MFR (g/10 Min.) nach Extrusion | | |
|---|---|---|---|---|---|---|
| | 1 | 3 | 5 | 1 | 3 | 5 |
| Ohne | 58 | 56 | 53 | 2,4 | 3,5 | 4,0 |
| 0,05% Beispiel 1 | 61 | 62 | 60 | 1,4 | 2,0 | 2,4 |
| 0,05% Beispiel 3 | 60 | 60 | 59 | 2,0 | 2,3 | 2,5 |
| 0,05% Beispiel 4 | 61 | 61 | 60 | 1,5 | 1,9 | 2,2 |

Tabelle II E

mit Costabilisator E

Extrusionstemperatur: 260°C

| Phosphit | Druck am Druckgeber nach Extrusion (kp/cm$^2$) | | | MFR (g/10 Min.) nach Extrusion | | |
|---|---|---|---|---|---|---|
| | 1 | 3 | 5 | 1 | 3 | 5 |
| Ohne | 61 | 59 | 56 | 1,9 | 2,7 | 3,3 |
| 0,05% Beispiel 1 | 64 | 64 | 62 | 1,2 | 1,3 | 1,4 |
| 0,05% Beispiel 3 | 64 | 64 | 63 | 1,3 | 1,5 | 1,6 |
| 0,05% Beispiel 4 | 64 | 65 | 63 | 1,4 | 1,4 | 1,5 |

Tabelle II F

mit Costabilisator F

Extrusionstemperatur: 260°C

| Phosphit | Druck am Druckgeber nach Extrusion (kp/cm$^2$) | | | MFR (g/10 Min.) nach Extrusion | | |
|---|---|---|---|---|---|---|
| | 1 | 3 | 5 | 1 | 3 | 5 |
| Ohne | 58 | 54 | 50 | 2,4 | 3,9 | 5,1 |
| 0,05% Beispiel 1 | 62 | 62 | 59 | 1,5 | 2,1 | 2,6 |
| 0,05% Beispiel 3 | 61 | 61 | 58 | 1,6 | 2,4 | 3,5 |
| 0,05% Beispiel 4 | 62 | 62 | 60 | 1,6 | 2,2 | 3,1 |

In ähnlicher Weise werden die erfindungsgemäßen Stabilisatoren ohne und mit Costabilisator A (wie auf Seite 26 definiert) in Profax 6501 wie oben beschrieben eingemischt und das formulierte Harz bei 288°C unter Anwendung der folgenden Extrudierbedingungen extrudiert:

| | Temperatur (°C) |
|---|---|
| Zylinder Nr. 1 | 260 |
| Zylinder Nr. 2 | 274 |
| Zylinder Nr. 3 | 288 |
| Düse Nr. 1 | 288 |
| Düse Nr. 2 | 288 |
| Düse Nr. 3 | 288 |
| UpM | 100 |

Die Ergebnisse sind in Tabelle III (ohne Costabilisator) und Tabelle III A (mit Costabilisator A) angeführt.

Tabelle III

ohne Costabilisator

Extrusionstemperatur: 288°C

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| Ohne | 28 | 16 | 11 | 7,9 | 35,8 | 78,5 |
| 0,1% Beispiel 1 | 38 | 34 | 29 | 3,5 | 6,2 | 9,8 |
| 0,1% Beispiel 4 | 37 | 35 | 29 | 3,8 | 6,2 | 9,0 |
| 0,1% Beispiel 14 | 36 | 38 | 32 | 3,0 | 5,3 | 9,6 |
| 0,1% Beispiel 3 | 35 | 36 | 29 | 3,7 | 5,6 | 9,2 |
| 0,1% Beispiel 2 | 38 | 36,5 | 29 | 3,6 | 6,2 | 10,7 |

Tabelle III A

mit Costabilisator D

Extrusionstemperatur: 288°C

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| Ohne | 31 | 27 | 21 | 5,9 | 10,2 | 15,6 |
| 0,05% Beispiel 1 | 37 | 42 | 34 | 3,3 | 4,1 | 5,8 |
| 0,05% Beispiel 4 | 37 | 42,5 | 37 | 3,1 | 4,2 | 5,0 |
| 0,05% Beispiel 14 | 36,5 | 41 | 33 | 2,8 | 3,7 | 5,0 |

Fortsetzung

| Phosphit | Druck am Druckgeber nach Extrusion ($kp/cm^2$) | | | MFR (g/10 Min.) nach Extrusion | | |
|---|---|---|---|---|---|---|
| | 1 | 3 | 5 | 1 | 3 | 5 |
| 0,05% Beispiel 3 | 35 | 40,5 | 34 | 3,5 | 4,6 | 6,0 |
| 0,05% Beispiel 2 | 37 | 40,5 | 35 | 3,3 | 4,6 | 6,4 |

**Patentansprüche**

1. Verbindungen der Formel

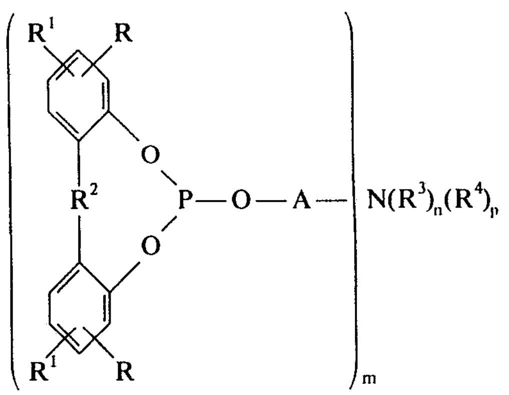

worin m, n und p alle 1 sind, m 2, n 1 und p 0 sind oder m 3 und n und p 0 sind, und worin R für Alkyl mit 1 bis 18 Kohlenstoffatomen, $R^1$ für Wasserstoff oder Alkyl mit 1 bis 18 Kohlenstoffatomen, $R^2$ für eine direkte Bindung oder Alkylen mit 1 bis 12 Kohlenstoffatomen, A für Alkylen mit 1 bis 16 Kohlenstoffatomen oder Cycloalkylen mit 5 bis 6 Kohlenstoffatomen und $R^3$ für Alkyl mit 1 bis 18 Kohlenstoffatomen oder

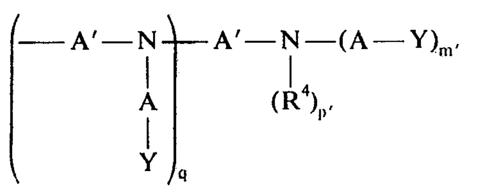

stehen, wobei Y

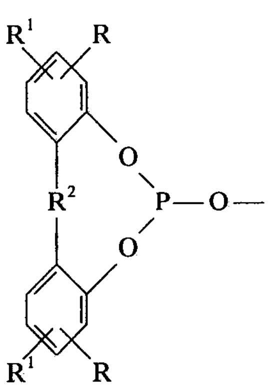

und A' Alkylen mit 1 bis 6 Kohlenstoffatomen oder Cycloalkylen mit 5 bis 6 Kohlenstoffatomen darstellen, m' 1 oder 2, p' 0 oder 1 und q 0–5 sind und A, R, $R^1$ und $R^2$ die oben angegebene Bedeutung haben, mit der Maßgabe, daß, wenn p, p' und q 0 sind, –N–A'–N eine Diazocycloalkylgruppe mit 2 bis 10 Kohlenstoffatomen bedeuten kann oder, wenn m 1 und p 0 sind, $N-R_3$ eine Azacycloalkylgruppe mit

2 bis 10 Kohlenstoffatomen oder eine Azaoxacycloalkylgruppe mit 3 bis 7 Kohlenstoffatomen bedeutet, und $R^4$ für Alkyl mit 1 bis 18 Kohlenstoffatomen steht.

2. Verbindungen nach Anspruch 1, dadurch gekennzeichnet, daß sich R im Phenylring jeweils in ortho-Stellung zum Phosphitsauerstoff befindet.

3. Verbindungen nach Anspruch 1, dadurch gekennzeichnet, daß R für Alkyl mit 4 bis 8 Kohlenstoffatomen steht.

4. Verbindungen nach Anspruch 1, dadurch gekennzeichnet, daß R für tert.-Butyl, tert.-Pentyl oder 1,1,3,3-Tetramethylbutyl steht.

5. Verbindungen nach Anspruch 1, dadurch gekennzeichnet, daß $R^1$ für tert.-Alkyl mit 4 bis 8 Kohlenstoffatomen steht.

6. Verbindungen nach Anspruch 1, dadurch gekennzeichnet, daß $R^2$ für eine direkte Bindung oder Alkylen der Formel

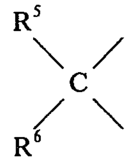

steht, worin $R^5$ und $R^6$ unabhängig voneinander Wasserstoff, Alkyl mit 1 bis 7 Kohlenstoffatomen oder Aryl bedeuten, mit der Maßgabe, daß die Gesamtzahl der Kohlenstoffatome 12 nicht übersteigt.

7. Verbindungen nach Anspruch 1, dadurch gekennzeichnet, daß $R^2$ für eine direkte Bindung, Methylen oder Äthyliden steht.

8. Verbindungen nach Anspruch 1, dadurch gekennzeichnet, daß $R^3$ und $R^4$ für Alkyl mit 1 bis 4 Kohlenstoffatomen stehen.

9. Verbindungen nach Anspruch 1, dadurch gekennzeichnet, daß A für Äthylen oder Trimethylen steht.

10. N-Methyliminodiäthylol-bis-(3,3',5,5'-tetra-tert.-butyl-1,1'-biphenyl-2,2'-diyl)-phosphit nach Anspruch 1.

11. 2,2',2"-Nitrilotriäthylol-tris-(3,3',5,5'-tetra-tert.-butyl-1,1'-diphenyl-2,2'-diyl)-phosphit nach Anspruch 1.

12. Stoffzusammensetzungen, bestehend aus organischem Material, das oxydativem, thermischen und aktinischem Abbau unterliegt, dadurch gekennzeichnet, daß sie mit einer zur Stabilisierung wirksamen Menge einer Verbindung nach Anspruch 1 stabilisiert sind.

13. Zusammensetzungen nach Anspruch 12, dadurch gekennzeichnet, daß als organisches Material ein synthetisches Polymer vorliegt.

14. Zusammensetzungen nach Anspruch 13, dadurch gekennzeichnet, daß als solches synthetisches Polymer ein Polyolefinhomopolymer oder -copolymer vorliegt.

15. Zusammensetzungen nach Anspruch 13, dadurch gekennzeichnet, daß das Polymer aus der Gruppe Polystyrol, Acrylnitril/Butadien/Styrol, Styrol/Butadienkautschuk, Polyester, Polyurethane, Polycarbonate, Polyamide und Polysulfone ausgewählt ist.

16. Zusammensetzungen nach Anspruch 12, dadurch gekennzeichnet, daß sie ferner ein phenolisches Antioxydans enthalten.

17. Zusammensetzungen nach Anspruch 12, dadurch gekennzeichnet, daß sie ferner ein Lichtschutzmittel enthalten.

## Claims

1. A compound of the formula

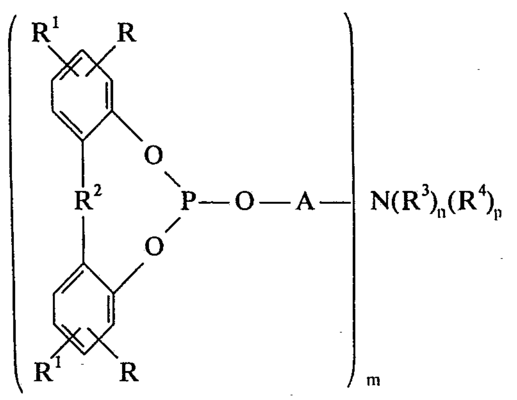

wherein m, n and p are each 1, m is 2 and n is 1 and p is 0 or m is 3 and p are 0, and wherein R is alkyl containing 1 to 18 carbon atoms, $R^1$ is hydrogen or alkyl containing 1 to 18 carbon atoms, $R^2$ is a direct bond or alkylene containing 1 to 12 carbon atomes, A is alkylene containing 1 to 6 carbon atoms, or cycloalkylene containing 5 to 6 carbon atoms, $R^3$ is alkyl containing 1 to 18 carbon atoms, or

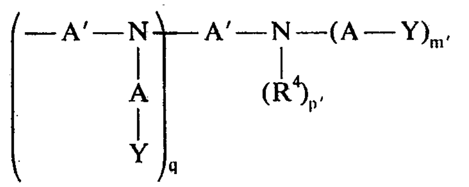

wherein Y is

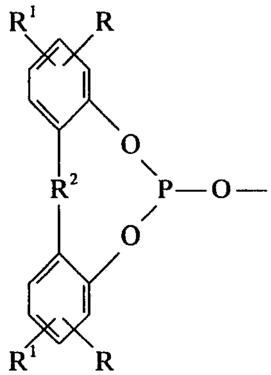

A' is alkylene containing 1 to 6 carbon atoms or cycloalkylene containing 5 to 6 carbon atoms, m' is 1 or 2, p' is 0 or 1, and q is 0 to 5, and A, R, $R^1$, $R^2$ are as defined above; with the proviso that when p, p' and q are 0, $-N-A'-N$ may be a diazacycloalkyl group containing 2 to 10 carbon atoms, or when m is 1 and p is 0, $N-R_3$ is an azacycloalkyl group containing 2 to 10 carbon atoms or an azaoxacycloalkyl group containing 3 to 7 carbon atoms; and $R^4$ is alkyl containing 1 to 18 carbon atoms.

2. A compound according to claim 1, wherein R is in the ortho-position to the phosphite oxygen in each of the phenyl rings.

3. A compound to claim 1, wherein R is alkyl containing 4 to 8 carbon atoms.

4. A compound according to claim 1, wherein R is tert.-butyl, tert.-pentyl or 1,1,3,3-tetramethylbutyl.

5. A compound according to claim 1, wherein $R^1$ is tert.-alkyl containing 4 to 8 carbon atoms.

6. A compound according to claim 1, wherein $R^2$ is a direct bond or alkylene of the formula

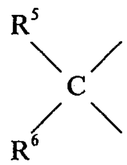

wherein each of $R^5$ and $R^6$ independently of the other is hydrogen, alkyl containing 1 to 7 carbon atoms or aryl, with the proviso that the total number of carbon atoms does not exceed 12.

7. A compound according to claim 1, wherein $R^2$ is a direct bond, methylene or ethylidene.

8. A compound according to claim 1, wherein $R^3$ and $R^4$ are alkyl containing 1 to 4 carbon atoms.

9. A compound according to claim 1, wherein A is ethylene or trimethylene.

10. N-Methyliminodiethylol-bis(3,3',5,5'-tetra-tert-butyl-1,1'-biphenyl-2,2'-diyl) phosphite according to claim 1.

11. 2,2',2''-Nitrilotriethylol-tris-(3,3',5,5'-tetra-tert-butyl-1,1'-diphenyl-2,2'-diyl) phosphite according to claim 1.

12. A composition of matter comprising an organic material subject to oxidative, thermal and actinic degradation stabilized with an effective stabilizing amount of a compound according to claim 1.

13. A composition according to claim 12, wherein the organic material is a synthetic polymer.

14. A composition according to claim 13, wherein the synthetic polymer is a polyolefin homopolymer or copolymer.

15. A composition according to claim 13, wherein the polymer is selected from the group consisting of polystyrene, acrylonitrile/butadiene/styrene, styrene/butadiene rubber, polyesters, polyurethanes, polycarbonates, polyamides and polysulfones.

16. A composition according to claim 12 which also contains a phenolic antioxidant.

17. A composition according to claim 12 which also contains a light stabilizer.

**Revendications**

1. Composés répondant à la formule:

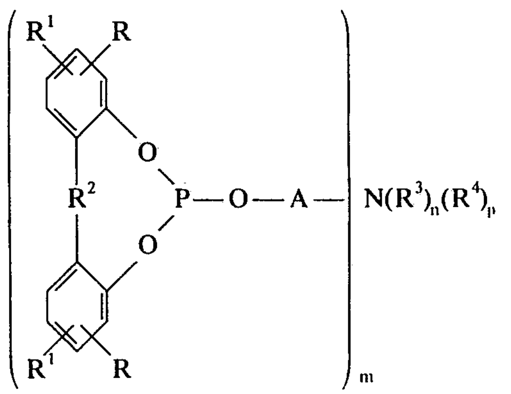

dans laquelle m, n et p représentent chacun le nombre 1, ou m est égal à 2, n à 1 et p à 0 ou m est égal à 3, n à 0 et p à 0, R représente un alkyle contenant de 1 à 18 atomes de carbone, $R^1$ représente l'hydrogène ou un alkyle contenant de 1 à 18 atomes de carbone, $R^2$ représente une liaison directe ou un alkylène contenant de 1 à 12 atomes de carbone, A représente un alkylène contenant de 1 à 6 atomes de carbone ou un cycloalkylène contenant 5 ou 6 atomes de carbone, $R^3$ représente un alkyle contenant de 1 à 18 atomes de carbone, un radical:

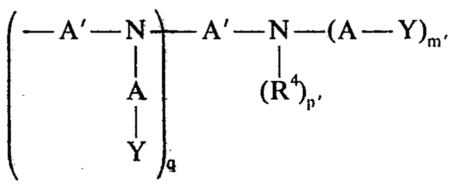

dans lequel Y représente:

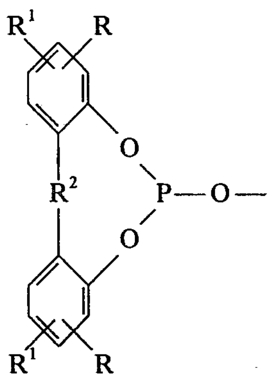

A' représente un alkylène contenant de 1 à 6 atomes de carbone ou un cycloalkylène contenant 5 ou 6 atomes de carbone, m' est égal à 1 ou à 2, p' à 0 ou à 1 et q à 0 ou à 5 et A, R, $R^1$ et $R^2$ ont les significations précédemment données, avec la condition que, lorsque p, p' et q sont égaux chacun à 0, le groupement $-N-A'-N$ peut représenter un radical diaza-cycloalkyle contenant de 2 à 10 atomes de carbone ou lorsque m est égal à 1 et p à 0, $N-R_3$ repré sente un radical azacycloalkyle contenant de 2 à 10 atomes de carbone ou un radical aza-oxa-cycloalkyle contenant de 3 à 7 atomes de carbone, et $R^4$ représente un alkyle contenant de 1 à 18 atomes de carbone.

2. Composés selon la revendication 1 caractérisés en ce que R, sur chacun des noyaux phényles, est en position ortho par rapport à l'oxygène phosphitique.

3. Composés selon la revendication 1 caractérisés en ce que R représente un alkyle contenant de 4 à 8 atomes de carbone.

4. Composés selon la revendication 1 caractérisés en ce que R représente un radical tert-butyle, tert-pentyle ou tétraméthyl-1,1,3,3 butyle.

5. Composés selon la revendications 1 caractérisés en ce que $R^1$ représente un radical tert-alkyle contenant de 4 à 8 atomes de carbone.

6. Composés selon la revendication 1 caractérisés en ce que $R^2$ représente une liaison directe ou un radical alkylène répondant à la formule:

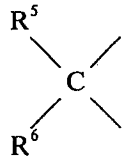

dans laquelle $R^5$ et $R^6$ représentent chacun, indépendamment l'un de l'autre, l'hydrogène, un alkyle contenant de 1 à 7 atomes de carbone ou un aryle, avec la condition que le nombre total des atomes de carbone ne dépasse pas 12.

7. Composés selon la revendication 1 caractérisés en ce que $R^2$ représente une liaison directe ou un radical méthylène ou éthylidène.

8. Composés selon la revendication 1 caractérisés en ce que $R^3$ et $R^4$ représentent chacun un alkyle contenant de 1 à 4 atomes de carbone.

9. Composés selon la revendication 1 caractérisés en ce que A représente un radical éthylène ou triméthylène.

10. N-Méthyliminodiéthylol-bis-[phosphite de (tetrakis-tert-butyl-3,3',5,5' biphényle-1,1' diyle-2,2')] selon la revendication 1.

11. Nitrilo-2,2',2" triéthylol-tris-[phosphite de (tétrakis-tert-butyl-3,3',5,5' biphényle-1,1' diyle-2,2')] selon la revendication 1.

12. Compositions constituées d'une matière organique susceptible de se dégrader sous l'effet de l'oxydation, de la chaleur ou d'un rayonnement actinique, compositions caractérisées en ce qu'elles sont stabilisées par un composé selon la revendication 1 en une quantité efficace pour produire un effet de stabilisation.

13. Compositions selon la revendication 12 caractérisées en ce que la matière organique est un polymère synthétique.

14. Compositions selon la revendication 13 caractérisées en ce que le polymère synthétique est un homopolymère ou un copolymère d'oléfines.

15. Compositions selon la revendication 13 caractérisées en ce que le polymère appartient à l'ensemble constitué par le polystyrène, le copolymère acrylonitrile/butadiène/styrène, le caoutchouc styrène/butadiène, les polyesters, les polyuréthannes, les polycarbonates, les polyamides et les polysulfones.

16. Compositions selon la revendication 12 caractérisées en ce qu'elles contiennent en outre un antioxydant phénolique.

17. Compositions selon la revendication 12 caractérisées en ce qu'elles contiennent en outre un stabilisant à la lumière.